# EUROPEAN PATENT APPLICATION

(11) **EP 4 012 318 A1**
(43) Date of publication of application: **15.06.2022**
(21) Application number: 19941030.9
(22) Date of filing: 09.08.2019
(51) Int. Cl.: F28D 15/04, F25B 41/30, B23P 15/26

(54) **EXPANSION DEVICE FOR REFRIGERATION APPARATUSES**

(71) Applicant: Hydro Extrusion Brasil S.A., 13308-910 ITU- SP (BR)
(72) Inventor: CUBA, Elton Ferreira Higino de, 18051-864 Sorocaba - SP (BR)
(74) Representative: Zacco Sweden AB
(86) International application number: PCT/BR2019/050326
(87) International publication number: WO 2021/026620

(57) **Abstract**

The invention relates to an expansion device for refrigeration apparatuses, comprising a suction tube (1) and a capillary tube (2) in a single extruded aluminum profile, in which the two parallel tubes, referred to as the suction tube (1) and the capillary tube (2), are linked together by a wall portion in the manner of a connection (3), in which said connection-shaped wall (3) can thus be cut to a sufficient desired length to release the ends of the suction tube (1) and of the capillary tube (2) at both tips or just one tip of the device, logically so that said tips can be handled and adapted to suit each project.

## Description

### Field of the invention

The present invention refers to the extrusion of a profile containing a suction tube and capillary tubes in order to improve heat transfer in commercial freezers, home freezers and refrigerators. More particularly, the present invention refers to technical, functional, and economic improvements applied to a particular type of expansion device traditionally used in different refrigeration systems, such as: refrigerators in general, freezers, refrigerated displays, refrigerated counters, air conditioners and others.

### State of the art.

In traditional refrigeration systems, the expansion device is installed between the condenser outlet and the evaporator inlet. The refrigerant, with high pressure and temperature, comes from the condenser and enters the expansion device and exits therefrom with a mixture of liquid and vapor with low pressure and low temperature. This mixture, which enters into the evaporator, is known as "flash gas." Regardless of the type, the expansion device is used to carry out two important functions in the refrigeration cycle: to allow the liquid refrigerant to enter the evaporator at a flow rate compatible with the speed at which it evaporates; and to provide a pressure and temperature drop, separating the high pressure side from the low pressure side of the system. This difference in pressure between the high and low sides makes the refrigerant evaporate in the evaporator at a temperature that is sufficiently low to absorb the heat of the environment and for it to condense in the condenser at a temperature that is sufficiently high to remove the indoor heat to the outdoor air. The time for the heat to be exchanged between the refrigerant in the expansion device and the outdoor air which surrounds it is so short that it can be ignored for practical purposes. For this reason, we can say that the expansion device is just a pressure drop device. The change in temperature of the refrigerant is solely the result of the pressure drop. Since there is no heat rejection in the expansion device, only temperature drop, part of the sensible heat transforms into latent heat.

Currently two basic types of expansion devices are used in refrigeration systems: capillary tube and valves, these can be automatic, of thermostatic expansion and of electronic expansion.

The capillary tube type expansion device is the most used in low capacity refrigeration systems. The capillary tube is a tube having a small inner diameter which is usually used in refrigeration systems to separate the high pressure line from the low pressure one. The technical name of the capillary tube is heat exchanger since it is always coiled around the suction tube, exchanging heat with it. Normally made of copper, the capillary tube is common in small capacity cooling systems: refrigerators, air conditioners, freezers, and others. The capillary tube connects the condenser outlet with the evaporator inlet. The inner diameter of the capillary tube varies from 0,5 to 2,5 mm, and the length from 1,5 to 3,5 m, whereby at least 1,2 m of this total of the capillary tube must be soldered at the aspiration line to obtain cooling by means of the cold vapors from the evaporator.

Therefore, usually the suction line which constitutes the expansion device is defined by a copper or aluminum suction tube plus copper capillary tube, both separated from each other, however, they are also assembled in an extremely common manner, using some simple steps, such as: a copper capillary tube coil and another tube coil for the suction line are received; both the capillary tube and the suction line must be cut at the desired length; the capillary tube is assembled at the suction line, guaranteeing a thermal exchange area between both of them; there are cases where a tape is used to ensure the thermal exchange area between capillary tube and suction line; and the suction line plus capillary have bends so that they remain in the configuration specified in each project.

Therefore, in short, the coupling between the suction line and the capillary tube is a known technology used by the HVAC (heating, ventilation, and air conditioner) market segments of white products. The basic principle is to cool the refrigerant at the capillary tube to reduce the enthalpy at the evaporator inlet and then improve the heat transfer. On the other hand, the refrigerant at the suction line will heat up to avoid the refrigerant in liquid phase entering the compressor, which can lead to valve plate breakage.

As already mentioned, there exist coupling solutions of the suction line and capillary tubes available in the market: (a) thermal retraction sleeve and adhesive tape; (b) coupling by means of the insertion of the capillary tube inside the tube of the suction line; (c) capillary tube brazing along the suction line.

In (a) and (b), the suction line can be made of aluminum or copper, and the capillary tube is always made of aluminum. In (c), both the suction line as the capillary tube are made of copper. In the known literature, the solution (c) is the most efficient since the refrigerant changes from liquid phase to vapor, and then all the heat is transferred by the conductivity through the tube wall. In solution (b) there is no guarantee that the capillary tube will be concluded emerged in the liquid phase of the refrigerant and in (a) there is poor contact between capillary tube and suction line.

There is no doubt that the state of the art offers means for a capillary tube expansion device to define an efficient suction line, capable of efficiently meeting several applications in cooling systems, however, it was observed that the set presents industrial feasibility which could be simplified, since, in the current manner, it is not possible to reduce the overall cost, not only due to using copper tubes, but also by requiring assembly steps and, further, in some cases, the use of the additional component to enhance the thermal exchange, all this concurs to significantly increasing the final cost of the set.

From the above disclosure, it is desirable a solution which offers an even more efficient product, following the concept (c) described above, combined with a reduction in costs mainly in the replacement of the copper capillary tube with the aluminum capillary tube of the integrated extrusion solution.

### Objectives of the invention

To define a technical solution which offers a more efficient product, following the concept (c) described above, combined with a reduction in costs mainly in the replacement of the copper capillary tube with the aluminum capillary tube of the integrated extrusion solution. Said solution is reached with the present single piece expansion device, wherein the line or suction tube and the capillary tube are extruded in aluminum as a single profile, consequently, we have two parallel tubes interconnected by a continuous wall portion called a bond, forming a single aluminum set, wherein the details of the connection between the two pieces, are already integrated to the set and, further, eliminating additional assembly components which also concur to increase the thermal exchange between the two tubes, concluding in a set for different cooling applications which use as expansion device a capillary tube, whether they are commercial or for households, such as: refrigerators, freezers, displays, refrigerated counters, air conditioners and others.

The expansion device in question presents different technical, practical and economic advantages, since it is initially observed that the cost of the aluminum is significantly lower than the cost of copper and, moreover, the density thereof corresponds to 30% of that of copper, respectively, 2,70 g/cm3 and 8,90 g/cm3. This means a solution having less weight. Since the capillary tube is extruded jointly with the tube (suction line), a heat exchange area is ensured in advance between capillary tube and suction line, eliminating the need for tape or brazing. Additionally, the number of items for stock programming/planning on the client side is reduced from 2 items (suction line tube and capillary tube) to 1 item. There is an expectation of improvement in the heat exchange, since the set comes down to a single piece.

### Description of the drawings

For a better understanding of the present invention, there follows a detailed description thereof with reference to the attached drawings:
FIGURE 01 represents a perspective view showing the present device;
FIGURE 02 shows an enlarged cross-sectional view emphasizing the single profile of the set;
FIGURE 03 illustrates another cross-sectional view, however, lengthwise, highlighting the connection wall between the two tubes; and the
FIGURE 04 is a perspective view highlighting the fact that the ends of the two tubes can be partially separated easily.

### Detailed description of the invention

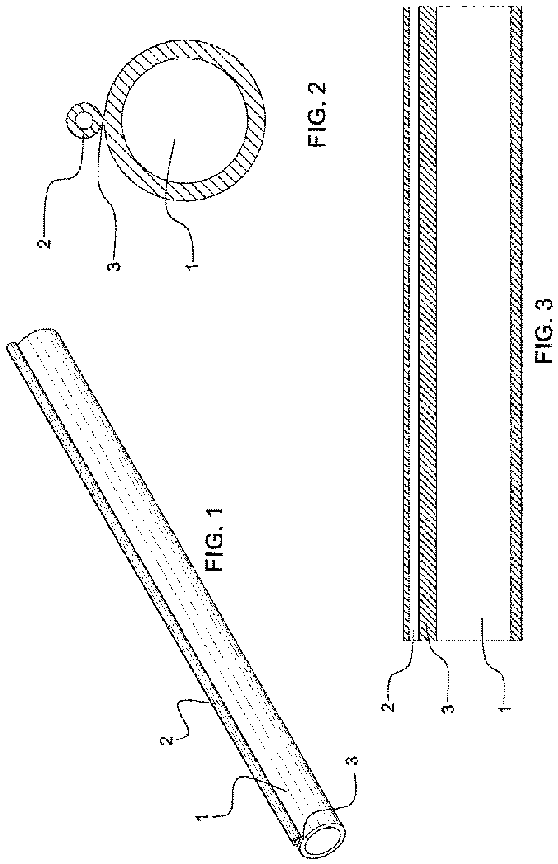

According to these illustrations and the details thereof, more particularly figures 1, 2 and 3, the present invention, **EXPANSION DEVICE FOR REFRIGERATION APPARATUSES,** comprises a suction tube (1) and a capillary tube (2), which are characterized by the fact that they are formed by a single extruded aluminum profile, wherein the two parallel tubes, referred to as the suction tube (1) and capillary tube (2), are interconnected by a connection-shaped wall portion (3).

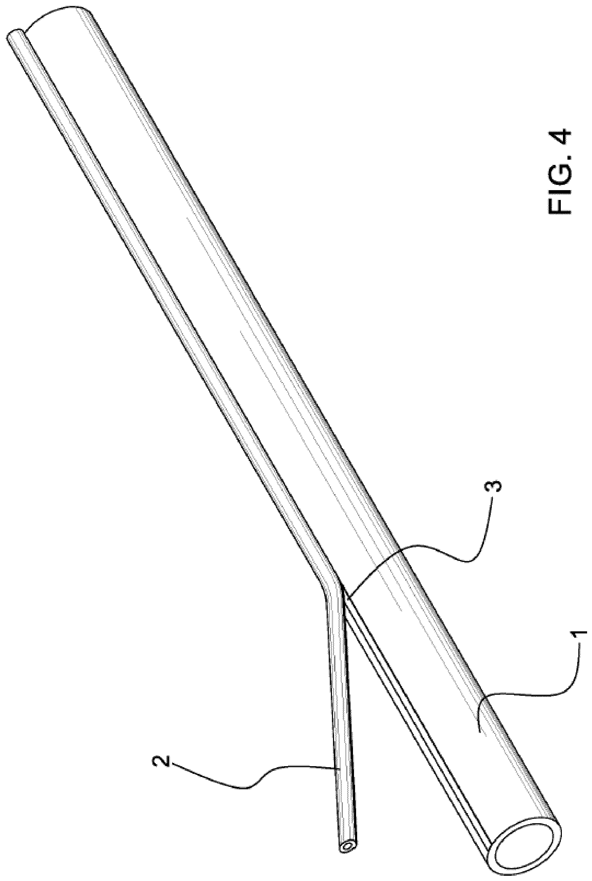

As illustrated in figure 4, said connection-shaped wall (3) is of the type which can be cut to a sufficient desired length to release the ends of the suction tube (1) and of the capillary tube (2) at both tips or just one tip of the device, logically so that said tips can be handled and adapted to suit each project.

The set is defined as a single piece, consequently, the suction line plus the capillary can have different bends and curves, not only at those separate tips, but also along the whole piece, providing means for each set to have a specified configuration for each project.

The operation of the set is exactly the same as that of the state of the art, that is, the refrigerant fluid continues flowing through the suction tube (1) and the capillary tube (2), that is, the refrigerant, with high pressure and temperature, comes from the condenser and enters the expansion device and exits therefrom with a mixture of liquid and vapor having low pressure and low temperature. This mixture which enters into the evaporator is known as "flash gas." Regardless of the type, the expansion device is used to carry out two important functions in the refrigeration cycle: to allow the liquid refrigerant to enter the evaporator at a flow rate compatible with the speed at which it evaporates; and to provide a pressure and temperature drop, separating the high pressure side from the low pressure side of the system. This difference in pressure between the high and low sides makes the refrigerant to evaporate in the evaporator at a temperature that is sufficiently low to absorb the heat of the environment and for it to condense in the condenser at a temperature that is sufficiently high to remove the indoor heat to the outdoor air.

It will be understood that certain characteristics and combinations of the EXPANSION DEVICE FOR REFRIGERATION APPARATUSES in relation to the suction tube and the capillary tube can vary considerably while maintaining the same functional concept for the set. Consequently, it should be noted that the embodiment now described in detail as an example is clearly subject to constructive variations, however, always within the scope of the inventive concept now disclosed to define an expansion device in a single piece, wherein the suction line or tube and the capillary tube are extruded in aluminum as a single profile, and since many alterations can be made in the configuration now detailed according to the requirements prescribed by law, it is understood that the present details must be interpreted in an illustrative rather than limiting manner.

## Claims

1. **EXPANSION DEVICE FOR REFRIGERATION APPARATUSES,** comprising a suction tube (1) and a capillary tube (2), **characterized in that** it is formed by a single extruded aluminum profile, in which the two parallel tubes, referred to as the suction tube (1) and the capillary tube (2), are linked together by a wall portion in the manner of a connection (3).

2. **EXPANSION DEVICE FOR REFRIGERATION APPARATUSES,** according to claim 1, **characterized in that** said connection-shaped wall (3) can be cut to a sufficient desired length to release the ends of the suction tube (1) and of the capillary tube (2) at both tips or just one tip of the device, so that said tips can be handled and adapted to suit each project.
